(19) Europäisches Patentamt
European Patent Office
Office européen des brevets

(11) **EP 4 119 317 A1**

(12) **EUROPÄISCHE PATENTANMELDUNG**

(43) Veröffentlichungstag:
18.01.2023 Patentblatt 2023/03

(21) Anmeldenummer: **22181151.6**

(22) Anmeldetag: **27.06.2022**

(51) Internationale Patentklassifikation (IPC):
**B29B 13/06** (2006.01)      **B29B 17/00** (2006.01)
**F26B 17/00** (2006.01)

(52) Gemeinsame Patentklassifikation (CPC):
**B29B 13/06; B29B 17/00; B29B 17/0026;
F26B 3/10; F26B 17/101;** B29B 2017/001;
F26B 2200/08

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **16.07.2021 DE 102021207614**

(71) Anmelder: **Coperion GmbH
70469 Stuttgart (DE)**

(72) Erfinder:
• **Matta, Marina
75050 Gemmingen (DE)**
• **Lang, Klaus-Peter
88339 Bad Waldsee (DE)**

(74) Vertreter: **Rau, Schneck & Hübner
Patentanwälte Rechtsanwälte PartGmbB
Königstraße 2
90402 Nürnberg (DE)**

(54) **VERFAHREN UND WIEDERAUFBEREITUNGSANLAGE ZUR WIEDERAUFBEREITUNG VON KUNSTSTOFF-ABFALLMATERIAL, INSBESONDERE VON PET-ABFALLMATERIAL**

(57)     Bei einem Verfahren zur Wiederaufbereitung von Kunststoff-Abfallmaterial ($M_W$), insbesondere von PET-Abfallmaterial, wird das Kunststoff-Abfallmaterial (Mw) mittels eines Stromtrockners (5) in einer Förderleitung (7) getrocknet und anschließend in eine Mehrwellen-Schneckenmaschine (2) zugeführt. In der Mehrwellen-Schneckenmaschine (2) wird das getrocknete Kunststoff-Abfallmaterial ($M_D$) wiederaufbereitet. Die Vortrocknung ermöglicht eine einfache, energieeffiziente, wirtschaftliche, zuverlässige und effektive Wiederaufbereitung.

Fig. 1

EP 4 119 317 A1

**Beschreibung**

Der Inhalt der deutschen Patentanmeldung DE 10 2021 207 614.9 wird durch Bezugnahme hierin aufgenommen.

Die Erfindung betrifft ein Verfahren und eine Wiederaufbereitungsanlage zur Wiederaufbereitung von Kunststoff-Abfallmaterial, insbesondere von PET-Abfallmaterial.

Das Wiederaufbereiten bzw. Recyceln von PET-Abfallmaterial (PET: Polyethylenterephthalat) ist bekannt. Hierzu werden PET-Abfälle, wie beispielsweise PET-Flaschen, zu PET-Abfallmaterial zerkleinert, das anschließend gewaschen wird. Durch das Waschen weist das PET-Abfallmaterial einen hohen Feuchteanteil auf, der die Wiederaufbereitung des PET-Abfallmaterials mittels einer Mehrwellen-Schneckenmaschine beeinträchtigt.

Aus der WO 2006/079 128 A1 (entspricht US 2009/0004325 A1) ist ein Verfahren zur Wiederaufbereitung von zu recycelndem PET-Abfallmaterial bekannt. Das PET-Abfallmaterial wird einem evakuierten Behälter zugeführt, in dem bewegte Werkzeuge angeordnet sind. Durch die Bewegung der Werkzeuge wird das in dem Behälter befindliche PET-Abfallmaterial erwärmt, getrocknet und zumindest teilweise kristallisiert. Nach der Trocknung und Kristallisation wird das PET-Abfallmaterial zur Wiederaufbereitung einem Einschnecken- oder Mehrschneckenextruder zugeführt.

Der Erfindung liegt die Aufgabe zugrunde, ein Verfahren zu schaffen, das eine einfache, energieeffiziente, wirtschaftliche, zuverlässige und effektive Wiederaufbereitung von Kunststoff-Abfallmaterial, insbesondere von PET-Abfallmaterial, ermöglicht.

Diese Aufgabe wird durch ein Verfahren mit den Merkmalen des Anspruchs 1 gelöst. Mittels des Stromtrockners wird das feuchte Kunststoff-Abfallmaterial auf einfache und schnelle Weise in der Förderleitung getrocknet. Aufgrund der kurzen Verweilzeit des Kunststoff-Abfallmaterials in der Förderleitung erfolgt das Trocknen energieeffizient und für das Kunststoff-Abfallmaterial schonend. Das Kunststoff-Abfallmaterial wird aufgrund des Trocknens nicht beansprucht. Der Stromtrockner hat einen einfachen Aufbau und einen geringen Platzbedarf, so dass die Investitions- und Betriebskosten gering sind. Hierdurch ist eine wirtschaftliche Wiederaufbereitung des Kunststoff-Abfallmaterials möglich.

Der Stromtrockner fördert das Kunststoff-Abfallmaterial in einer Förderrichtung in der Förderleitung. Der Stromtrockner ist in der Förderrichtung vor der Mehrwellen-Schneckenmaschine angeordnet, so dass das Kunststoff-Abfallmaterial vor dem Wiederaufbereiten mittels eines Fördergases getrocknet bzw. vorgetrocknet wird. Das Trocknen des Kunststoff-Abfallmaterials ist somit ein Vortrocknen vor dem Wiederaufbereiten bzw. Recyceln des getrockneten Kunststoff-Abfallmaterials. Vor dem Zuführen in die Mehrwellen-Schneckenmaschine wird das getrocknete Kunststoff-Abfallmaterial von dem Fördergas getrennt.

Dadurch, dass das Kunststoff-Abfallmaterial getrocknet der Mehrwellen-Schneckenmaschine zugeführt wird, muss beim Wiederaufbereiten nur wenig Feuchtigkeit aus der Mehrwellen-Schneckenmaschine abgeführt werden. Zum Abführen von Feuchtigkeit weist die Mehrwellen-Schneckenmaschine insbesondere mindestens eine Entgasungseinrichtung auf. Die Entgasungseinrichtung kann im Vergleich zu einem Wiederaufbereiten von feuchtem Kunststoff-Abfallmaterial kleiner dimensioniert werden. Darüber hinaus kann mittels des erfindungsgemäßen Verfahrens die Mehrwellen-Schneckenmaschine mit einem höheren Durchsatz betrieben werden, da die beim Wiederaufbereiten freiwerdende Feuchtigkeit die Materialschmelze in der Mehrwellen-Schneckenmaschine nicht aufschäumt und die mindestens eine Entgasungseinrichtung verstopft. Das getrocknete Kunststoff-Abfallmaterial kann somit zuverlässig, effektiv und mit einer hohen Qualität wiederaufbereitet werden.

Das Kunststoff-Abfallmaterial ist zerkleinert, insbesondere geschreddert. Das Kunststoff-Abfallmaterial ist insbesondere als Flocken (Flakes), Schnipsel und/oder Gewölle ausgebildet. Das Kunststoff-Abfallmaterial ist insbesondere ein PET-Abfallmaterial (PET: Polyethylenterephthalat). Das Kunststoff-Abfallmaterial wird beispielsweise in Big-Bags angeliefert.

Die Mehrwellen-Schneckenmaschine umfasst ein Gehäuse mit mindestens zwei darin ausgebildeten Gehäusebohrungen. In den mindestens zwei Gehäusebohrungen sind mindestens zwei Behandlungselementwellen angeordnet. Die mindestens zwei Behandlungselementwellen sind um zugehörige Drehachsen drehantreibbar. Die Behandlungselementwellen sind insbesondere gleichsinnig, also in gleichen Drehrichtungen, drehantreibbar und/oder dichtkämmend ausgebildet. Das Drehantreiben der mindestens zwei Behandlungselementwellen erfolgt mittels eines Antriebsmotors über ein Verzweigungsgetriebe. Die Mehrwellen-Schneckenmaschine ist insbesondere als gleichsinnig rotierende Zweiwellen-Schneckenmaschine ausgebildet.

Das getrocknete Kunststoff-Abfallmaterial und/oder Kunststoff-Neumaterial wird mittels der Mehrwellen-Schneckenmaschine zu einer Materialschmelze plastifiziert. Anschließend wird die Materialschmelze mittels der Mehrwellen-Schneckenmaschine aufbereitet bzw. wiederaufbereitet. Das Plastifizieren und/oder das Aufbereiten bzw. Wiederaufbereiten kann insbesondere mindestens einen der Schritte Entgasen, Einmischen, Aufschmelzen und Homogenisieren umfassen. In die Mehrwellen-Schneckenmaschine kann insbesondere mindestens ein Additiv und/oder Kunststoff-Neumaterial (Virginmaterial), insbesondere PET-Neumaterial, zugeführt werden. Das durch das Aufbereiten bzw. Wiederaufbereiten entstehende Rohmaterial kann wieder zur Herstellung von Kunststoff-Produkten bzw. PET-Produkten verwendet werden. Das Rohmaterial wird beispielsweise gefiltert und/oder zu Granulat granuliert und/oder direkt weiterverarbeitet.

Ein Verfahren nach Anspruch 2 gewährleistet eine einfache, energieeffiziente, wirtschaftliche, zuverlässige und effektive Wiederaufbereitung. Der Stromtrockner erzeugt ein strömendes Fördergas. Das strömende Fördergas wird zum Trocknen des Kunststoff-Abfallmaterials insbesondere erwärmt. Das strömende Fördergas fördert das Kunststoff-Abfallmaterial in der Förderrichtung zu der Mehrwellen-Schneckenmaschine. Während der Förderung wird das Kunststoff-Abfallmaterial mittels des erwärmten Fördergases getrocknet. Das Fördergas ist insbesondere Luft bzw. Förderluft. Das strömende Fördergas wird beispielsweise durch eine Druckförderung und/oder eine Saugförderung erzeugt. Das Kunststoff-Abfallmaterial wird insbesondere pneumatisch gefördert. Das Kunststoff-Abfallmaterial wird im Gleichstrom mit dem Fördergas gefördert, also in der Förderrichtung. Das Fördergas strömt in der Förderleitung. Zum Beladen des Fördergases mit dem Kunststoff-Abfallmaterial weist die Förderleitung insbesondere mindestens eine Zuführöffnung auf.

Das Trocknen des Kunststoff-Abfallmaterials erfolgt schonend. Das Kunststoff-Abfallmaterial wird mittels des Stromtrockners um eine Temperatur $\Delta T$ erwärmt. Für die Temperatur $\Delta T$ gilt insbesondere: $2\,°C \leq \Delta T \leq 80\,°C$, insbesondere $5\,°C \leq \Delta T \leq 70\,°C$, und insbesondere $10\,°C \leq \Delta T \leq 60\,°C$.

Das Kunststoff-Abfallmaterial wird nach dem Stromtrockner insbesondere ohne eine weitere Erwärmung und/oder eine weitere Trocknung der Mehrwellen-Schneckenmaschine zugeführt. Das getrocknete Kunststoff-Material wird der Mehrwellen-Schneckenmaschine insbesondere mit einer Temperatur $T_K$ zugeführt, wobei für die Temperatur $T_K$ insbesondere gilt: $0\,°C \leq T_K \leq 100\,°C$, insbesondere $10\,°C \leq T_K \leq 90\,°C$, insbesondere $20\,°C \leq T_K \leq 80\,°C$, insbesondere $30\,°C \leq T_K \leq 70\,°C$, und insbesondere $40\,°C \leq T_K \leq 60\,°C$. Das getrocknete Kunststoff-Abfallmaterial wird der Mehrwellen-Schneckenmaschine insbesondere nicht-kristallisiert zugeführt.

Ein Verfahren nach Anspruch 3 gewährleistet eine einfache, energieeffiziente, wirtschaftliche, zuverlässige und effektive Wiederaufbereitung. Das Fördergas hat die Temperatur $T_G$ insbesondere bei Eintritt des Kunststoff-Abfallmaterials in die Förderleitung. Die Temperatur $T_G$ ist insbesondere niedriger als eine Schmelztemperatur Ts des Kunststoff-Abfallmaterials. Für die Schmelztemperatur Ts von PET gilt insbesondere: $250\,°C \leq T_S \leq 260\,°C$. Je höher die Temperatur $T_G$ ist, desto höher ist die Trocknungswirkung des Stromtrockners. Durch eine höhere Trocknungswirkung kann die Verweilzeit des Kunststoff-Abfallmaterials in dem Fördergas und/oder die spezifische Fördergasmenge pro Kilogramm Kunststoff-Abfallmaterial reduziert werden.

Ein Verfahren nach Anspruch 4 gewährleistet eine einfache, energieeffiziente, wirtschaftliche, zuverlässige und effektive Wiederaufbereitung. Das Fördergas hat die Temperatur $T_G$ insbesondere bei Eintritt des Kunststoff-Abfallmaterials in die Förderleitung. Die Temperatur $T_G$ ist niedriger als die Schmelztemperatur Ts des Kunststoff-Abfallmaterials. Je höher die Temperatur $T_G$ ist, desto höher ist die Trocknungswirkung des Stromtrockners. Durch eine höhere Trocknungswirkung kann die Verweilzeit des Kunststoff-Abfallmaterials in dem Fördergas reduziert werden.

Ein Verfahren nach Anspruch 5 gewährleistet eine einfache, energieeffiziente, wirtschaftliche, zuverlässige und effektive Wiederaufbereitung. Das Verhältnis der Masse $m_M$ des Kunststoff-Abfallmaterials zu der Masse $m_G$ des Fördergases ist auch als Beladung bezeichnet. Wird beispielsweise 1 kg Fördergas mit 1 kg Kunststoff-Abfallmaterial beladen, so gilt für die Beladung: $m_M/m_G = 1$. Eine zu hohe Beladung beeinträchtigt die Trocknungswirkung des Stromtrockners. Die angegebenen Bereiche für die Beladung gelten insbesondere bei Eintritt des Kunststoff-Abfallmaterials in das Fördergas.

Ein Verfahren nach Anspruch 6 gewährleistet eine einfache, energieeffiziente, wirtschaftliche, zuverlässige und effektive Wiederaufbereitung. Eine hohe Fördergeschwindigkeit $v_G$ verbessert die Trocknungswirkung des Stromtrockners und ermöglicht eine kurze Verweilzeit $t_G$ des Kunststoff-Abfallmaterials in dem Fördergas. Hierdurch ist das Trocknen besonders energieeffizient und wirtschaftlich.

Ein Verfahren nach Anspruch 7 gewährleistet eine einfache, energieeffiziente, wirtschaftliche, zuverlässige und effektive Wiederaufbereitung. Durch die kurze Verweilzeit $t_G$ ist das Trocknen des Kunststoff-Abfallmaterials mittels des Stromtrockners besonders energieeffizient und wirtschaftlich. Die Verweilzeit $t_G$ ist insbesondere definiert als Zeitspanne zwischen dem Eintritt des Kunststoff-Abfallmaterials in das Fördergas bis zu der Trennung des getrockneten Kunststoff-Abfallmaterials von dem Fördergas.

Ein Verfahren nach Anspruch 8 gewährleistet eine einfache, energieeffiziente, wirtschaftliche, zuverlässige und effektive Wiederaufbereitung. Auf das Kunststoff-Abfallmaterial wird während der Förderung in der Förderleitung mindestens eine Kraft ausgeübt, so dass das Kunststoff-Abfallmaterial während der Förderung umgelenkt und/oder in Rotation versetzt und/oder dispergiert und/oder verzögert und/oder beschleunigt wird. Zur Ausübung der Kraft dient insbesondere mindestens ein Trocknungselement. Das jeweilige Trocknungselement verbessert das Trocknen des Kunststoff-Abfallmaterials während der Förderung. Das jeweilige Trocknungselement ist insbesondere Teil der Förderleitung und/oder in die Förderleitung integriert. Das mindestens eine Trocknungselement ist insbesondere ausgebildet als Umlenkleitungsabschnitt, Vertikalleitungsabschnitt, Querschnittänderungsleitungsabschnitt und/oder Richtungsänderungsbauteil. Das Richtungsänderungsbauteil ist beispielsweise ein Dispergierbauteil und/oder ein Drallbauteil. Durch die sich ändernde Bewegung, insbesondere die sich ändernde Geschwindigkeit und/oder Richtung, des Kunststoff-Abfallmaterials wird die Trocknungswirkung des Stromtrockners verbessert und die Trocknung beschleunigt.

Ein Verfahren nach Anspruch 9 gewährleistet eine einfache, energieeffiziente, wirtschaftliche, zuverlässige und effektive Wiederaufbereitung. Das Kunststoff-Abfallmaterial ist bei Zuführung in das Fördergas bzw. in die Förderleitung feucht. Das Kunststoff-Abfallmaterial hat einen Zuführ-Feuchteanteil $\psi_1$. Der Zuführ-Feuchteanteil $\psi_1$ ist wie folgt definiert:

$$\psi_1 = \frac{m_{W1}}{m_M} = \frac{m_M - m_{Mt}}{m_{W1} + m_{Mt}},$$

wobei bezeichnet:

$m_{W1}$    die Masse der Feuchtigkeit bzw. des Wassers bei Zuführung,

$m_M$    die Masse des feuchten Kunststoff-Abfallmaterials bei Zuführung,

$m_{Mt}$    die Masse des trockenen bzw. wasserfreien Kunststoff-Abfallmaterials.

Entsprechend hat das getrocknete Kunststoff-Abfallmaterial bei Abführung aus dem Fördergas bzw. aus der Förderleitung einen Abführ-Feuchteanteil $\psi_2$. Der Abführ-Feuchteanteil $\psi_2$ ist wie folgt definiert:

$$\psi_2 = = \frac{m_{W2}}{m_{MD}} = \frac{m_{MD} - m_{Mt}}{m_{W2} + m_{Mt}},$$

wobei bezeichnet:

$m_{W2}$    die Masse der Feuchtigkeit bzw. des Wassers bei Abführung,

$m_{MD}$    die Masse des getrockneten Kunststoff-Abfallmaterials $M_D$ bei Abführung.

Die Einheit ppm ist eine Abkürzung für "parts per million" und beschreibt die Masse $m_{W1}$ bzw. $m_{W2}$ in mg bezogen auf die Masse $m_M$ bzw. $m_{MD}$ in kg. Der Feuchteanteil $\psi_1$ bzw. $\psi_2$ wird durch ein wasserselektives Messverfahren ermittelt, beispielsweise durch die Karl-Fischer-Titration.

Die Feuchtigkeit bzw. Feuchte setzt sich zusammen aus einer im Kunststoff-Abfallmaterial gebundenen inneren Feuchte und einer Oberflächenfeuchte. Dementsprechend setzt sich der Zuführ-Feuchteanteil $\psi_1$ zusammen aus einem inneren Feuchteanteil $\psi_I$ und einem Oberflächenfeuchteanteil $\psi_{O1}$. Es gilt:

$$\psi_1 = \psi_I + \psi_{O1}.$$

Der innere Feuchteanteil $\psi_I$ ist in dem Kunststoff-Abfallmaterial gebunden und bleibt durch das Trocknen des Kunststoff-Abfallmaterials mittels des Stromtrockners im Wesentlichen konstant. Demgegenüber befindet sich der Oberflächenfeuchteanteil $\psi_{O1}$ auf der Oberfläche des Kunststoff-Abfallmaterials und wird durch das Trocknen mittels des Stromtrockners mindestens zu 70 Gew.-%, insbesondere zu mindestens 80 Gew.-%, und insbesondere zu mindestens 90 Gew.-% entfernt. Für den Abführ-Feuchteanteil $\psi_2$ gilt somit:

$$\psi_2 = \psi_I + \psi_{O2},$$

wobei $\psi_{O2}$ den Oberflächenfeuchteanteil bei Abführung des getrockneten Kunststoff-Abfallmaterials bezeichnet. Es gilt insbesondere:

0 ppm $\leq \psi_{O2} \leq$ 3000 ppm, insbesondere 100 ppm, $\leq \psi_{O2} \leq$ 2500 ppm, und insbesondere 300 ppm $\leq \psi_{O2} \leq$ 2000 ppm.

Ein Verfahren nach Anspruch 10 gewährleistet eine einfache, energieeffiziente, wirtschaftliche, zuverlässige und effektive Wiederaufbereitung. Dadurch, dass das Kunststoff-Abfallmaterial vor dem Zuführen in die Mehrwellen-Schneckenmaschine getrocknet wird, muss das getrocknete Kunststoff-Abfallmaterial während der Wiederaufbereitung in der Mehrwellen-Schneckenmaschine weniger entfeuchtet und entgast werden. Insbesondere führt das getrocknete Kunststoff-Abfallmaterial nicht zu einem Aufschäumen der Materialschmelze in der Mehrwellen-Schneckenmaschine. Der Durchsatz D der Mehrwellen-Schneckenmaschine kann somit deutlich erhöht werden, wodurch die Wiederaufbereitung wirtschaftlicher ist.

Ein Verfahren nach Anspruch 11 gewährleistet eine einfache, energieeffiziente, wirtschaftliche, zuverlässige und effektive Wiederaufbereitung. Durch das Aufschmelzen des getrockneten Kunststoff-Abfallmaterials wird insbesondere der gebundene innere Feuchteanteil freigesetzt. Der freigesetzte innere Feuchteanteil und ggf. ein in geringem Maße verbliebener Oberflächenfeuchteanteil wird mittels mindestens einer Entgasungseinrichtung entgast und aus der Mehrwellen-Schneckenmaschine abgeführt. Dadurch, dass der Feuchteanteil vergleichsweise gering ist, muss lediglich ein geringer Feuchteanteil aus der Mehrwellen-Schneckenmaschine abgeführt bzw. entgast werden. Hierdurch kann die mindestens eine Entgasungseinrichtung beim Entgasen mit einem höheren Druck $p_{abs}$ betrieben werden. Durch den höheren Druck $p_{abs}$ kann die mindestens eine Entgasungseinrichtung kleiner und wirtschaftlicher dimensioniert werden. Hierdurch wird die Wiederaufbereitung wirtschaftlicher.

Der Erfindung liegt ferner die Aufgabe zugrunde, eine Wiederaufbereitungsanlage zu schaffen, die eine einfache, energieeffiziente, wirtschaftliche, zuverlässige und effektive Wiederaufbereitung von Kunststoff-Abfallmaterial, insbesondere von PET-Abfallmaterial, ermöglicht.

Diese Aufgabe wird durch eine Wiederaufbereitungsanlage mit den Merkmalen des Anspruchs 12 gelöst. Die Vorteile der erfindungsgemäßen Wiederaufbereitungsanlage entsprechen den bereits beschriebenen Vorteilen des erfindungsgemäßen Verfahrens zur Wiederaufbereitung von Kunststoff- Abfallmaterial. Die erfindungsgemäße Wiederaufbereitungsanlage kann mit mindestens einem Merkmal weitergebildet werden, das in Zusammenhang mit dem erfindungsgemäßen Verfahren beschrieben ist. Entsprechend kann das erfindungsgemäße Verfahren durch mindestens ein Merkmal weitergebildet werden, das im Zusammenhang mit der erfindungsgemäßen Wiederaufbereitungsanlage beschrieben ist.

Die Mehrwellen-Schneckenmaschine umfasst insbesondere ein Gehäuse mit mindestens zwei darin ausgebildeten Gehäusebohrungen. In den mindestens zwei Gehäusebohrungen sind mindestens zwei Behandlungselementwellen angeordnet. Die mindestens zwei Behandlungselementwellen sind um zugehörige Drehachsen drehantreibbar. Die Behandlungselementwellen sind insbesondere gleichsinnig, also in gleichen Drehrichtungen, drehantreibbar und/oder dicht kämmend ausgebildet. Das Drehantreiben der mindestens zwei Behandlungselementwellen erfolgt mittels eines Antriebsmotors über ein Verzweigungsgetriebe. Die Mehrwellen-Schneckenmaschine ist insbesondere als gleichsinnig rotierende Zweiwellen-Schneckenmaschine ausgebildet.

Der Stromtrockner dient zum Trocknen des feuchten Kunststoff-Abfallmaterials in der Förderleitung während des Förderns zu der Mehrwellen-Schneckenmaschine. Der Stromtrockner fördert das Kunststoff-Abfallmaterial in einer Förderrichtung in der Förderleitung. Der Stromtrockner ist in der Förderrichtung vor der Mehrwellen-Schneckenmaschine angeordnet. Zwischen dem Stromtrockner und der Mehrwellen-Schneckenmaschine erfolgt insbesondere keine weitere Erwärmung und/oder Trocknung des Kunststoff-Abfallmaterials.

Eine Wiederaufbereitungsanlage nach Anspruch 13 gewährleistet eine einfache, energieeffiziente, wirtschaftliche, zuverlässige und effektive Wiederaufbereitung. Mittels des Stromerzeugers wird in der Förderleitung ein strömendes Fördergas erzeugt. Das Fördergas wird zum Trocknen des Kunststoff-Abfallmaterials mittels der Heizeinrichtung erwärmt. Vorzugsweise erwärmt die Heizeinrichtung das strömende Fördergas. Die Förderleitung umfasst mindestens eine Zuführöffnung zum Zuführen des Fördergases und/oder des Kunststoff-Abfallmaterials. Vorzugsweise umfasst die Förderleitung mindestens eine Zuführöffnung zum Zuführen des Fördergases und mindestens eine Zuführöffnung zum Zuführen des Kunststoff-Abfallmaterials. Die Förderleitung umfasst vorzugsweise mindestens eine Abführöffnung zum Abführen des getrockneten Kunststoff-Materials. Zwischen der mindestens einen Zuführöffnung zum Zuführen des Kunststoff-Abfallmaterials und der mindestens einen Abführöffnung zum Abführen des Kunststoff-Abfallmaterials hat die Förderleitung eine Länge $L_F$, wobei insbesondere gilt: 5 m $\leq L_F \leq$ 100 m,

insbesondere 10 m $\leq L_F \leq$ 70 m, und insbesondere 20 m $\leq L_F \leq$ 50 m. Die Förderleitung ist zumindest abschnittsweise, vorzugsweise über mindestens 90 % der Länge $L_F$ mit einer Isolationsschicht umgeben.

Der Stromerzeuger kann drückend oder saugend ausgebildet sein. Der Stromerzeuger kann in der Förderleitung angeordnet sein. Der Stromerzeuger ist insbesondere stromabwärts nach mindestens einem Filter und/oder Staubabscheider angeordnet. Der Stromerzeuger umfasst beispielsweise ein Fördergebläse.

Die Heizeinrichtung ist elektrisch und/oder mit einem erwärmten Heizfluid, beispielsweise mit Wasser, Dampf, Thermoöl und/oder Heißgas, betreibbar. Die Heizeinrichtung umfasst insbesondere ein Heizgerät zum Erhitzen eines Heizfluids und/oder einen Wärmetauscher zum Übertragen thermischer Energie von dem Heizfluid auf das Fördergas.

Eine Wiederaufbereitungsanlage nach Anspruch 14 gewährleistet eine einfache, energieeffiziente, wirtschaftliche, zuverlässige und effektive Wiederaufbereitung. Die Trenneinrichtung ist insbesondere zwischen der Förderleitung und der Mehrwellen-Schneckenmaschine angeordnet. Vorzugsweise mündet eine Abführöffnung der Förderleitung in die Trenneinrichtung. Die Trenneinrichtung ist beispielsweise als Zyklon ausgebildet. Die Trenneinrichtung dient zum Abtrennen des getrockneten Kunststoff-Abfallmaterials von dem feuchten Fördergas. Vorzugsweise ist zwischen der Trenneinrichtung und der Mehrwellen-Schneckenmaschine ein Mischer zur Vereinheitlichung des Kunststoff-Abfallmaterials, insbesondere von unterschiedlichen Chargen des Kunststoff-Abfallmaterials, angeordnet. Der Mischer umfasst beispielsweise einen Behälter und mindestens ein darin angeordnetes Mischelement zum Durchmischen des im Behälter befindlichen getrockneten Kunststoff-Abfallmaterials. Mittels des Mischers erfolgt insbesondere keine weitere Trocknung des Kunststoff-Abfallmaterials. Eine etwaige Temperaturerhöhung in dem Mischer beträgt insbesondere weniger als 10 °C, insbesondere weniger als 5 °C, und insbesondere weniger als 1 °C. Die Trenneinrichtung ist insbesondere mit einem Abscheider zum Abscheiden von Feinanteilen aus dem feuchten Fördergas verbunden.

Eine Wiederaufbereitungsanlage nach Anspruch 15 gewährleistet eine einfache, energieeffiziente, wirtschaftliche, zuverlässige und effektive Wiederaufbereitung. Das mindestens eine Trocknungselement dient zur Verbesserung bzw. Beschleunigung des Trocknens des feuchten Kunststoff-Abfallmaterials. Das mindestens eine Trocknungselement dient insbesondere zur Ausübung einer Kraft auf das Kunststoff-Abfallmaterial, so dass das Kunststoff-Abfallmaterial während der Förderung umgelenkt und/oder in Rotation versetzt und/oder dispergiert und/oder verzögert und/oder beschleunigt wird. Das mindestens eine Trocknungselement ist insbesondere Teil der Förderleitung und/oder in die Förderleitung integriert. Das mindestens eine Trocknungselement ist insbesondere ausgebildet als Umlenkleitungsabschnitt, Vertikalleitungsabschnitt, Querschnittänderungsleitungsabschnitt und/oder Richtungsänderungsbauteil, beispielsweise als Dispergierbauteil und/oder als Drallbauteil. Vorzugsweise weist der Stromtrockner eine Anzahl N von Trocknungselementen auf, wobei gilt: $1 \leq N \leq 20$, insbesondere $2 \leq N \leq 16$, und insbesondere $4 \leq N \leq 12$. Vorzugsweise weist die Förderleitung eine Anzahl U von Umlenkleitungsabschnitten auf, wobei gilt: $1 \leq U \leq 10$, insbesondere $2 \leq U \leq 8$, und insbesondere $3 \leq U \leq 6$. Die Umlenkleitungsabschnitte dienen zum Verzögern und Beschleunigen des Fördergases bzw. des geförderten Kunststoff-Abfallmaterials, wodurch der Trocknungsvorgang verbessert wird. Die Umlenkleitungsabschnitte können als Rohrbogen, als auf Gehrung gesägte und miteinander verschweißte Rohrabschnitte, als T-Stück, als Umlenktopf und/oder als gammaförmiges Rohrstück ausgebildet sein. Der jeweilige Umlenkleitungsabschnitt definiert einen Umlenkwinkel $\alpha$, wobei insbesondere gilt: $10° \leq \alpha \leq 150°$, insbesondere $15° \leq \alpha \leq 135°$, und insbesondere $20° \leq \alpha \leq 120°$. Vorzugsweise umfasst der Stromtrockner mindestens einen Umlenkleitungsabschnitt in Verbindung mit einem Vertikalleitungsabschnitt. Je größer die Trocknungswirkung des mindestens einen Trocknungselements ist, desto höher ist in der Regel die aufzubringende Förderenergie.

Eine Wiederaufbereitungsanlage nach Anspruch 16 gewährleistet eine einfache, energieeffiziente, wirtschaftliche, zuverlässige und effektive Wiederaufbereitung. Eine erste Dosiereinrichtung dient zum Beladen des Stromtrockners mit dem feuchten Kunststoff-Abfallmaterial. Die erste Dosiereinrichtung ermöglicht ein exaktes Beladen des Fördergases mit dem Kunststoff-Abfallmaterial. Die erste Dosiereinrichtung umfasst insbesondere einen gravimetrischen Dosierer und/oder einen volumetrischen Dosierer und/oder eine Zuführschneckenmaschine. Die Dosiereinrichtung mündet in die Förderleitung. Die erste Dosiereinrichtung ist insbesondere mit mindestens einer Zuführöffnung der Förderleitung verbunden. Die erste Dosiereinrichtung ist insbesondere in einer Förderrichtung einer Heizeinrichtung zum Erwärmen eines Fördergases nachgeordnet. Hierdurch wird erwärmtes Fördergas mit dem Kunststoff-Abfallmaterial beladen.

Die zweite Dosiereinrichtung dient zum Zuführen des getrockneten Kunststoff-Abfallmaterials in die Mehrwellen-Schneckenmaschine. Die Dosiereinrichtung umfasst insbesondere einen gravimetrischen Dosierer und/oder einen volumetrischen Dosierer und/oder eine Zuführschneckenmaschine. Vorzugsweise umfasst die zweite Dosiereinrichtung einen Mischer, der vor einem Dosierer angeordnet ist. Der Mischer dient zur Vereinheitlichung des getrockneten Kunststoff-Abfallmaterials, insbesondere unterschiedlicher Chargen des Kunststoff-Abfallmaterials. Der Mischer umfasst vorzugsweise einen Behälter und mindestens ein darin angeordnetes Mischelement zum Durchmischen des in dem Behälter befindlichen Kunststoff-Abfallmaterials.

Der Mischer dient insbesondere nicht zur weiteren Trocknung des Kunststoff-Abfallmaterials. Eine etwaige Temperaturerhöhung des Kunststoff-Abfallmaterials in dem Behälter beträgt insbesondere weniger als 10 °C, insbesondere weniger als 5 °C, und insbesondere weniger als 1 °C. Die zweite Dosiereinrichtung, insbesondere der Dosierer, mündet vorzugsweise in eine Zuführöffnung der Mehrwellen-Schneckenmaschine.

Eine Wiederaufbereitungsanlage nach Anspruch 17 gewährleistet eine einfache, energieeffiziente, wirtschaftliche, zuverlässige und effektive Wiederaufbereitung. Mittels der mindestens einen Entgasungseinrichtung wird eine beim Aufschmelzen freiwerdende innere Feuchtigkeit bzw. innere Feuchte und eine ggf. noch vorhandene Oberflächenfeuchtigkeit bzw. Oberflächenfeuchte des Kunststoff-Abfallmaterials aus der Mehrwellen-Schneckenmaschine entfernt. Dadurch, dass das Kunststoff-Abfallmaterial mittels des Stromtrockners getrocknet wurde, insbesondere die Oberflächenfeuchtigkeit entfernt wurde, kann die mindestens eine Entgasungseinrichtung kleiner dimensioniert werden. Hierdurch wird die Wirtschaftlichkeit der Wiederaufbereitung erhöht. Die Volumenleistung der mindestens einen Entgasungseinrichtung ist abhängig von dem Feuchteanteil des getrockneten Kunststoff-Abfallmaterials, dem Durchsatz der Mehrwellen-Schneckenmaschine und dem für das Entgasen erforderlichen Drucks $p_{abs}$. Vorzugsweise umfasst die Mehrwellen-Schneckenmaschine mindestens eine Entgasungsöffnung, insbesondere mindestens zwei Entgasungsöffnungen, die in der Förderrichtung nacheinander angeordnet sind. In einer der mindestens einen Entgasungseinrichtung zugehörigen Entgasungszone weist die Materialschmelze insbesondere eine Temperatur $T_M$ auf, wobei gilt: $265 °C \leq T_M \leq 300 °C$, insbesondere $270 °C \leq T_M \leq 285 °C$.

Die Verweilzeit vs der Materialschmelze in der Entgasungszone beträgt insbesondere $10\ s \leq vs \leq 45\ s$, insbesondere $15\ s \leq vs \leq 30\ s$. Vorzugsweise weist die mindestens eine Entgasungseinrichtung mindestens zwei Entgasungsöffnungen auf, die in der Förderrichtung nacheinander angeordnet sind. Die Entgasungszone liegt insbesondere zwischen zwei Entgasungsöffnungen der Mehrwellen-Schneckenmaschine. Die mindestens eine Entgasungseinrichtung umfasst insbesondere eine Vakuumpumpe. Die mindestens eine Entgasungseinrichtung, insbesondere die Vakuumpumpe, wird vorzugsweise mit einem Volumenstrom pro kg Materialschmelze betrieben, der zwischen 0,3 m³/kg und 2,5 m³/kg, insbesondere zwischen 0,5 m³/kg und 1,5 m³/kg, und insbesondere zwischen 0,6 m³/kg und 1,2 m³/kg liegt.

Eine Wiederaufbereitungsanlage nach Anspruch 18 gewährleistet eine einfache, energieeffiziente, wirtschaftliche, zuverlässige und effektive Wiederaufbereitung. Die Steuereinrichtung ist insbesondere derart ausgestaltet, dass die Wiederaufbereitungsanlage nach mindestens einem Merkmal betreibbar ist, das im Zusammenhang mit den Ansprüchen 1 bis 17 beschrieben ist.

Weitere Merkmale, Vorteile und Einzelheiten der Erfindung ergeben sich aus der nachfolgenden Beschreibung eines Ausführungsbeispiels. Es zeigen:

Fig. 1 eine schematische Ansicht einer Wiederaufbereitungsanlage zur Wiederaufbereitung von Kunststoff-Abfallmaterial, insbesondere von PET-Abfallmaterial, mit einer Zuführvorrichtung und einer Mehrwellen-Schneckenmaschine,

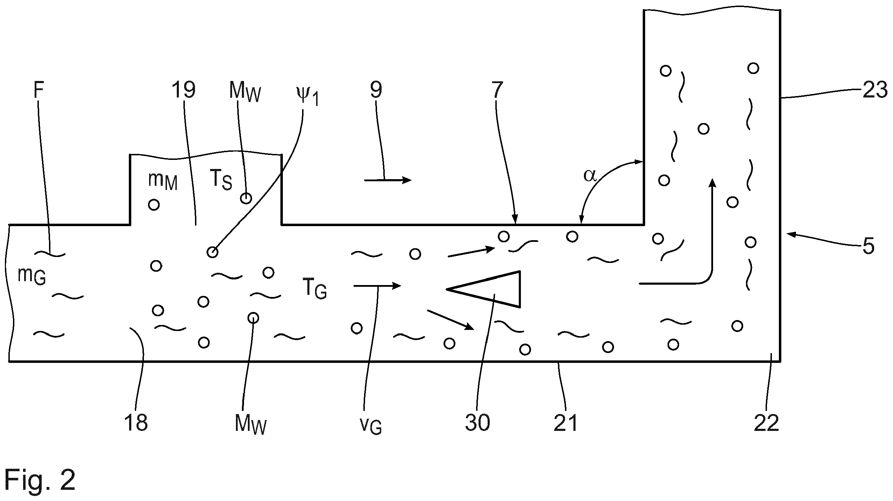

Fig. 2 eine vergrößerte und ausschnittsweise Ansicht eines Stromtrockners der Zuführvorrichtung in Fig. 1,

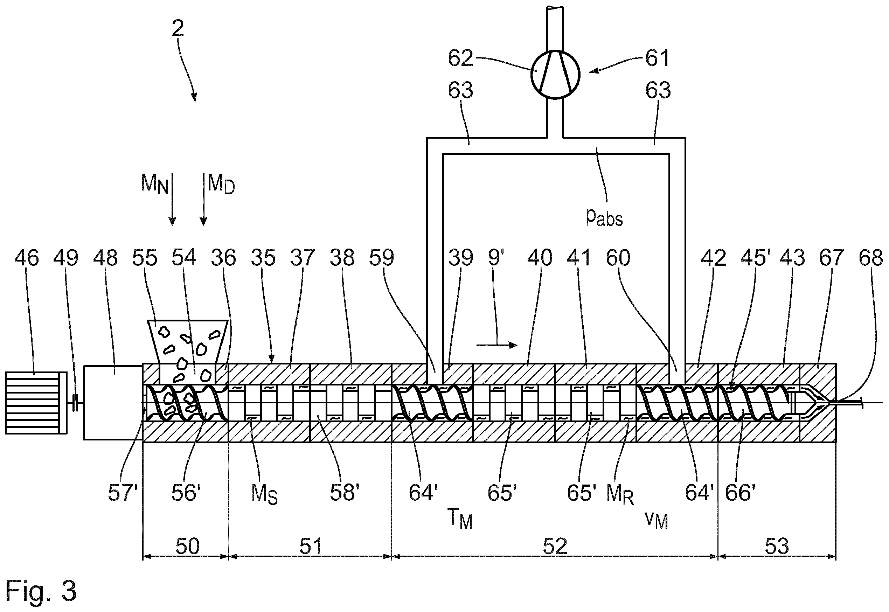

Fig. 3 eine teilweise geschnittene Seitenansicht der Mehrwellen-Schneckenmaschine in Fig. 1, und

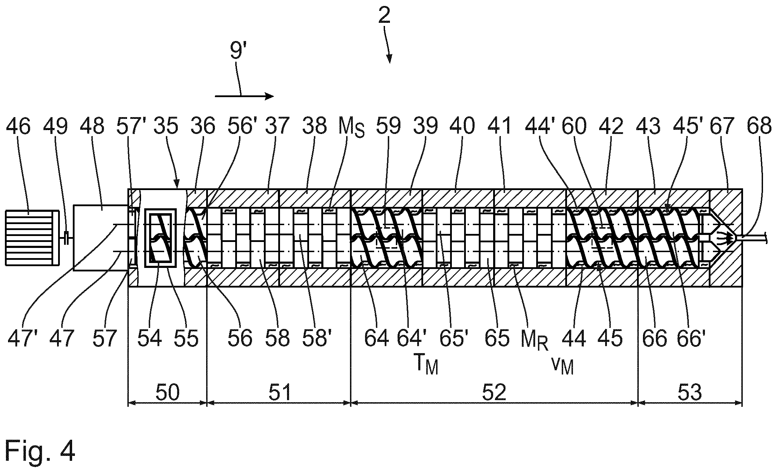

Fig. 4 eine teilweise geschnittene Draufsicht auf die Mehrwellen-Schneckenmaschine in Fig. 3.

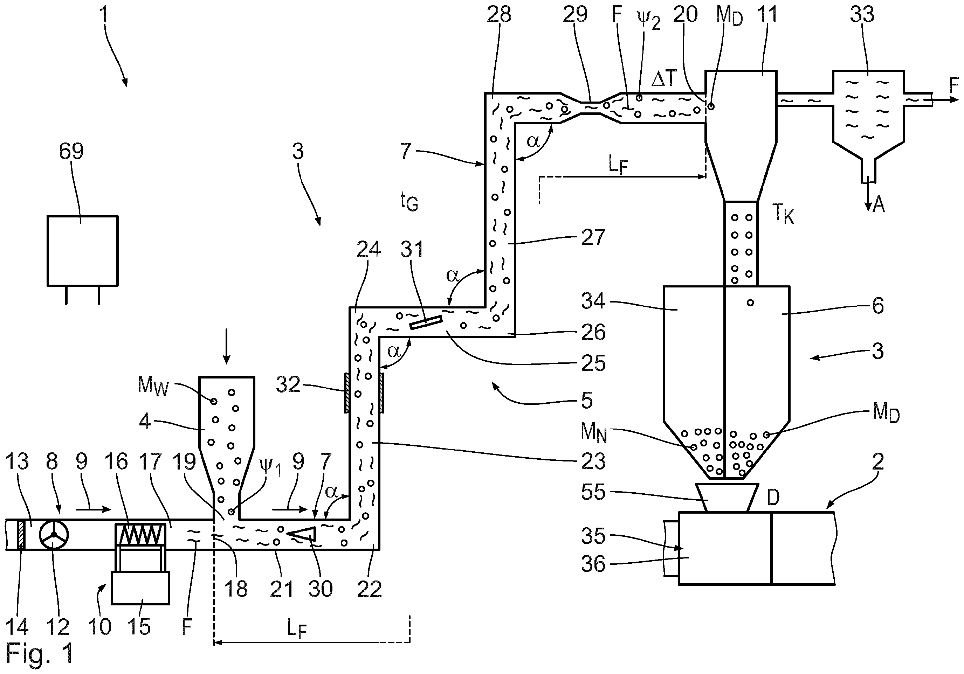

Eine in Fig. 1 dargestellte Wiederaufbereitungsanlage 1 dient zur Wiederaufbereitung von feuchtem Kunststoff-Abfallmaterial Mw. Das Kunststoff-Abfallmaterial $M_W$ ist als PET-Abfallmaterial (PET: Polyethylenterephthalat) ausgebildet. Die Wiederaufbereitungsanlage 1 umfasst eine Mehrwellen-Schneckenmaschine 2 zum Plastifizieren und Wiederaufbereiten des Kunststoff-Abfallmaterials und eine Zuführvorrichtung 3 zum Zuführen des Kunststoff-Abfallmaterials in die Mehrwellen-Schneckenmaschine 2.

Die Zuführvorrichtung 3 umfasst eine erste Dosiereinrichtung 4, einen Stromtrockner 5 und eine zweite Dosiereinrichtung 6. Die erste Dosiereinrichtung 4 dient zum Beladen des Stromtrockners 5 mit dem feuchten Kunststoff-Abfallmaterial Mw. Die erste Dosiereinrichtung 4 weist beispielsweise eine Zuführschneckenmaschine und/oder einen gravimetrischen Dosierer und/oder einen volumetrischen Dosierer auf.

Der Stromtrockner 5 dient zum Trocknen des feuchten Kunststoff-Abfallmaterials Mw. Der Stromtrockner 5 umfasst eine Förderleitung 7, einen Stromerzeuger 8 zum Erzeugen eines in einer Förderrichtung 9 strömenden Fördergases F, eine Heizeinrichtung 10 zum Erwärmen des Fördergases F und eine Trenneinrichtung 11 zum Abtrennen des mittels des Stromtrockners 5 getrockneten Kunststoff-Abfallmaterials $M_D$ von dem aufgrund der Trocknung feuchten Fördergas F.

Der Stromerzeuger 8 weist ein Fördergebläse 12 auf, das über eine Ansaugleitung 13 und einen darin angeordneten Filter 14 das Fördergas F ansaugt. Das Fördergas F ist insbesondere Luft.

Die Heizeinrichtung 10 ist mit dem Stromerzeuger 8 über eine Verbindungsleitung 17 verbunden und in der Förderrichtung 9 nach dem Stromerzeuger 8 angeordnet. Die Heizeinrichtung 10 umfasst ein Heizgerät 15 zum Erwärmen eines Heizfluids und einen mit dem Heizgerät 15 verbundenen Wärmetauscher 16 zum Übertragen thermischer Energie von dem Heizfluid auf das strömende Fördergas F. Das Heizfluid ist beispielsweise Wasser, Dampf, Thermoöl oder ein Gas. Der Wärmetauscher 16 ist innerhalb der Verbindungsleitung 17 angeordnet. Alternativ kann die Heizeinrichtung 10 zum direkten elektrischen Erwärmen des Fördergases F ausgebildet sein.

Die Verbindungsleitung 17 ist über eine Fördergas-Zuführöffnung 18 mit der Förderleitung 7 verbunden. Die Förderleitung 7 beginnt an einer Zuführöffnung 19 zum Zuführen des Kunststoff-Abfallmaterials Mw. Die Förderleitung 7 führt zu der Trenneinrichtung 11 und mündet in die Trenneinrichtung 11. Hierzu weist die Förderleitung 7 eine Abführöffnung 20 auf. Die Förderleitung 7 endet an der Abführöffnung 20. Die Förderleitung 7 weist von der Zuführöffnung 19 bis zu der Abführöffnung 20 eine Länge $L_F$ auf, wobei insbesondere gilt: 5 m $\leq L_F$ $\leq$ 100 m, insbesondere 10 m $\leq L_F \leq$ 70 m, und insbesondere 20 m $\leq L_F \leq$ 50 m. Die Förderleitung 7 kann zur Reduzierung von Energieverlusten mit einer Isolationsschicht 32 ummantelt sein. Die Isolationsschicht 32 ist in Fig. 1 lediglich angedeutet.

Die Förderleitung 7 weist in der Förderrichtung 9 nacheinander einen ersten Horizontalleitungsabschnitt 21, einen ersten Umlenkleitungsabschnitt 22, einen ersten Vertikalleitungsabschnitt 23, einen zweiten Umlenkleitungsabschnitt 24, einen zweiten Horizontalleitungsabschnitt 25, einen dritten Umlenkleitungsabschnitt 26, einen zweiten Vertikalleitungsabschnitt 27, einen vierten Umlenkleitungsabschnitt 28 und einen Querschnittänderungsleitungsabschnitt 29 auf. In dem ersten Horizontalleitungsabschnitt 21 ist ein erstes Richtungsänderungsbauteil 30 angeordnet, das als Dispergierbauteil ausgebildet ist. In dem zweiten Horizontalleitungsabschnitt 25 ist ein zweites Richtungsänderungsbauteil 31 angeordnet, das als Drallbauteil ausgebildet ist. Die Umlenkleitungsabschnitte 22, 24, 26, 28, die Vertikalleitungsabschnitte 23, 27, der Querschnittänderungsleitungsabschnitt 29 und die in die Horizontalleitungsabschnitte 21, 25 integrierten Richtungsänderungsbauteile 30, 31 bilden jeweils ein Trocknungselement aus, das zur Verbesserung des Trocknens des Kunststoff-Abfallmaterials Mw dient. Durch das jeweilige Trocknungselement wird das Trocknen beschleunigt. Die Trocknungselemente sind Teil des Stromtrockners 5.

Vorzugsweise weist der Stromtrockner 5 eine Anzahl N von Trocknungselementen auf, wobei gilt: 1 $\leq$ N $\leq$ 20, insbesondere 2 $\leq$ N $\leq$ 16, und insbesondere 4 $\leq$ N $\leq$ 12. Vorzugsweise weist die Förderleitung 7 eine Anzahl U von Umlenkleitungsabschnitten auf, wobei gilt: 1 $\leq$ U $\leq$ 10, insbesondere 2 $\leq$ U $\leq$ 8, und insbesondere 3 $\leq$ U $\leq$ 6.

Die Umlenkleitungsabschnitte 22, 24, 26, 28 schließen jeweils einen Umlenkwinkel $\alpha$ ein, wobei insbesondere gilt: 10° $\leq \alpha \leq$ 150°, insbesondere 15° $\leq \alpha \leq$ 135°, und insbesondere 20° $\leq \alpha \leq$ 120°.

Die Trenneinrichtung 11 dient zum Abtrennen des getrockneten Kunststoff-Abfallmaterials $M_D$ von dem aufgrund der Trocknung feuchten Fördergas F. Zum Zuführen des getrockneten Kunststoff-Abfallmaterials $M_D$ ist die Trenneinrichtung 11 mit der zweiten Dosiereinrichtung 6 verbunden. Die Trenneinrichtung 11 ist ferner mit einem Abscheider 33 verbunden. Der Abscheider 33 dient zum Abscheiden der in dem Fördergas F enthaltenen Feinanteile A bzw. des Staubs. Der Abscheider 33 ist Teil des Stromtrockners 5.

Die zweite Dosiereinrichtung 6 dient zum Zuführen des getrockneten Kunststoff-Abfallmaterials $M_D$ in die Mehrwellen-Schneckenmaschine 2. Die zweite Dosiereinrichtung 6 umfasst beispielsweise eine Zuführschneckenmaschine und/oder einen gravimetrischen Dosierer und/oder einen volumetrischen Dosierer. Zum Zuführen von Kunststoff-Neumaterial $M_N$ weist die Zuführvorrichtung 3 eine dritte Dosiereinrichtung 34 auf. Die dritte Dosiereinrichtung 34 umfasst beispielsweise eine Zuführschneckenmaschine und/oder einen gravimetrischen Dosierer und/oder einen volumetrischen Dosierer.

Die Mehrwellen-Schneckenmaschine 2 dient zum Plastifizieren des getrockneten Kunststoff-Abfallmaterials $M_D$ und/oder des Kunststoff-Neumaterials $M_N$ zu einer Materialschmelze $M_S$ und zum Aufbereiten bzw. Wiederaufbereiten der Materialschmelze $M_S$ zu Rohmaterial $M_R$. Die Mehrwellen-Schneckenmaschine 2 ist als gleichsinnig rotierende Zweiwellen-Schneckenmaschine ausgebildet. Die Mehrwellen-Schneckenmaschine 2 umfasst ein Gehäuse 35 aus mehreren nacheinander angeordneten Gehäuseabschnitten 36 bis 43. Die Gehäuseabschnitte 36 bis 43 sind zur Ausbildung des Gehäuses 35 miteinander verbunden. In dem Gehäuse 35 sind zwei zueinander parallele und einander durchdringende Gehäusebohrungen 44, 44' ausgebildet, die im Querschnitt die Form einer liegenden Acht haben. In den Gehäusebohrungen 44, 44' sind konzentrisch zwei Behandlungselementwellen 45, 45' angeordnet, die von einem Antriebsmotor 46 um zugehörige Drehachsen 47, 47' drehantreibbar sind. Zwischen den Behandlungselementwellen 45, 45' und dem Antriebsmotor 46 sind ein Verzweigungsgetriebe 48 und eine Kupplung 49 angeordnet. Die Behandlungselementwellen 45, 45' werden mittels des Antriebsmotors 46 gleichsinnig, also in gleichen Drehrichtungen um die Drehachsen 47, 47' drehangetrieben.

Die Mehrwellen-Schneckenmaschine 2 weist in einer Förderrichtung 9' nacheinander eine Einzugszone 50, eine Plastifizier- und Homogenisierzone 51, eine Entgasungszone 52 und eine Austragszone 53 auf.

In der Einzugszone 50 weist der Gehäuseabschnitt 36 eine Zuführöffnung 54 auf. In die Zuführöffnung 54 mündet ein Einlauftrichter 55. Die Behandlungselementwellen 45, 45' umfassen in der Einzugszone 50 Schneckenelemente 56, 56', die auf zugehörigen Wellen 57, 57' drehfest angeordnet sind und zum Fördern dienen.

In der Plastifizier- und Homogenisierzone 51 erfolgt ein Plastifizieren bzw. Aufschmelzen des getrockneten Kunststoff-Abfallmaterials $M_D$ und/oder des Kunststoff-Neumaterials $M_N$ und ein Homogenisieren der Materialschmelze Ms. Zum Plastifizieren und Homogenisieren sind in der Plastifizier- und Homogenisierzone 51 Knetelemente 58, 58' auf den Wellen 57, 57' drehfest angeordnet. Vorzugsweise sind in der Plastifizier- und Homogenisierzone 51 Knetblöcke auf den Wellen 57, 57' angeordnet, die mehrere einteilig miteinander ausgebildete Knetscheiben umfassen.

Die Entgasungszone 52 dient zum Entgasen der Materialschmelze Ms. Zum Entgasen sind in den Gehäuseabschnitten 39, 42 Entgasungsöffnungen 59, 60 ausgebildet. Die Mehrwellen-Schneckenmaschine 2 umfasst eine Entgasungseinrichtung 61, die an die Entgasungsöffnungen 59, 60 angeschlossen ist. Die Entgasungseinrichtung 61 umfasst eine Vakuumpumpe 62, die über Entgasungsleitungen 63 mit den Entgasungsöffnungen 59, 60 verbunden sind. In der Entgasungszone 52 sind Schneckenelemente 64, 64' und Knetelemente 65, 65' auf den Wellen 57, 57' drehfest angeordnet. Vorzugsweise sind in der Entgasungszone 52 Knetblöcke angeordnet, die aus mehreren einteilig miteinander verbundenen Knetscheiben ausgebildet sind.

In der Austragszone 53 sind Schneckenelemente 66, 66' auf den Wellen 57, 57' drehfest angeordnet, um das Rohmaterial $M_R$ auszutragen. An dem letzten Gehäuseabschnitt 43 ist eine das Gehäuse 35 abschließende Düsenplatte 67 angeordnet, die eine Austragsöffnung 68 ausbildet.

Die Wiederaufbereitungsanlage 1 umfasst eine Steuereinrichtung 69 zum Steuern der Zuführvorrichtung 3 und/oder der Mehrwellen-Schneckenmaschine 2. Die Steuereinrichtung 69 ist in Signalverbindung mit der Zuführvorrichtung 3 und der Mehrwellen-Schneckenmaschine 2.

Nachfolgend ist die Funktionsweise der Wiederaufbereitungsanlage 1 und ein Verfahren zur Wiederaufbereitung des Kunststoff-Abfallmaterials Mw beschrieben:

Die erste Dosiereinrichtung 4 wird mit dem feuchten Kunststoff-Abfallmaterial Mw versorgt. Das feuchte Kunststoff-Abfallmaterial Mw ist zerkleinert und gewaschen. Das feuchte Kunststoff-Abfallmaterial Mw wird beispielsweise in Big-Bags antransportiert. Das Kunststoff-Abfallmaterial Mw hat eine Schmelztemperatur Ts, wobei insbesondere gilt: 250 °C ≤ $T_S$ ≤ 260 °C.

Das Fördergas F wird mittels des Stromerzeugers 8 in der Förderrichtung 9 mit einer Fördergeschwindigkeit $v_G$ bewegt. Für die Fördergeschwindigkeit $v_G$ in der Förderleitung 7 gilt insbesondere: 5 m/s ≤ $v_G$ ≤ 50 m/s, insbesondere 10 m/s ≤ $v_G$ ≤ 45 m/s, und insbesondere 15 m/s ≤ $v_G$ ≤ 40 m/s.

Mittels der Heizeinrichtung 10 wird das Fördergas F erwärmt und hat in der Förderleitung 7 eine Temperatur $T_G$. Für die Temperatur $T_G$ gilt insbesondere: 70 °C ≤ $T_G$ ≤ 250 °C, insbesondere 80 °C ≤ $T_G$ ≤ 220 °C, und insbesondere 90 °C ≤ $T_G$ ≤ 190 °C.

Für die Temperatur $T_G$ gilt in Abhängigkeit der Schmelztemperatur Ts insbesondere: $T_S - 100\ °C \le T_G < T_S$, insbesondere $T_S - 80\ °C \le T_G \le T_S - 10\ °C$, und insbesondere $T_S - 60\ °C \le T_G \le T_S - 20\ °C$.

Die Steuereinrichtung 69 steuert die erste Dosiereinrichtung 4 und den Stromerzeuger 8 derart, dass eine Masse $m_G$ des Fördergases F mit einer Masse $m_M$ des Kunststoff-Abfallmaterials $M_W$ beladen wird. Das Verhältnis $m_M/m_G$ ist auch als Beladung bezeichnet. Für die Beladung gilt insbesondere: $0,3 \le m_M/m_G \le 4$, insbesondere $0,4 \le m_M/m_G \le 3$, und insbesondere $0,5 \le m_M/m_G \le 2$.

Das Kunststoff-Abfallmaterial Mw hat bei Zuführung in das Fördergas F einen Zuführ-Feuchteanteil $\psi_1$, wobei gilt: $4000\ ppm \le \psi_1 \le 50000\ ppm$, insbesondere $5000\ ppm \le \psi_1 \le 35000\ ppm$, und insbesondere $6000\ ppm \le \psi_1 \le 20000\ ppm$. Das Kunststoff-Abfallmaterial Mw wird mittels des Stromtrockners 5 in der Förderleitung 7 getrocknet, so dass das getrocknete Kunststoff-Abfallmaterial $M_D$ bei Abführung aus dem Fördergas F einen Abführ-Feuchteanteil $\psi_2$ hat, wobei gilt: $3000\ ppm \le \psi_2 \le 6000\ ppm$, insbesondere $3500\ ppm \le \psi_2 \le 5500\ ppm$, und insbesondere $4000\ ppm \le \psi_2 \le 5000\ ppm$.

Der Zuführ-Feuchteanteil $\psi_1$ ist wie folgt definiert:

$$\psi_1 = \frac{m_{W1}}{m_M} = \frac{m_M - m_{Mt}}{m_{W1} + m_{Mt}},$$

wobei bezeichnet:

$m_{W1}$    die Masse der Feuchtigkeit bzw. des Wassers bei Zuführung,

$m_M$    die Masse des feuchten Kunststoff-Abfallmaterials $M_W$ bei Zuführung,

$m_{Mt}$    die Masse des trockenen bzw. wasserfreien Kunststoff-Abfallmaterials.

Der Abführ-Feuchteanteil $\psi_2$ ist wie folgt definiert:

$$\psi_2 = = \frac{m_{W2}}{m_{MD}} = \frac{m_{MD} - m_{Mt}}{m_{W2} + m_{Mt}},$$

wobei bezeichnet:

$m_{W2}$    die Masse der Feuchtigkeit bzw. des Wassers bei Abführung,

$m_{MD}$    die Masse des getrockneten Kunststoff-Abfallmaterials $M_D$ bei Abführung.

Die Einheit ppm ist eine Abkürzung für "parts per million" und beschreibt die Masse $m_{W1}$ bzw. $m_{W2}$ in mg bezogen auf die Masse $m_M$ bzw. $m_{MD}$ in kg.

Die Feuchtigkeit bzw. Feuchte setzt sich zusammen aus einer im Kunststoff-Abfallmaterial Mw bzw. $M_D$ gebundenen inneren Feuchte und einer Oberflächenfeuchte. Dementsprechend setzt sich der Zuführ-Feuchteanteil $\psi_1$ zusammen aus einem inneren Feuchteanteil $\psi_I$ und einem Oberflächenfeuchteanteil $\psi_{O1}$. Es gilt:

$$\psi_1 = \psi_I + \psi_{O1}.$$

Der innere Feuchteanteil $\psi_I$ ist in dem Kunststoff-Abfallmaterial $M_W$ bzw. $M_D$ gebunden und bleibt trotz des Trocknens des Kunststoff-Abfallmaterials Mw mittels des Stromtrockners 5 im Wesentlichen konstant. Demgegenüber befindet sich der Oberflächenfeuchteanteil $\psi_{O1}$ auf der Oberfläche des Kunststoff-Abfallmaterials $M_W$ und wird durch das Trocknen mittels des Stromtrockners 5 mindestens zu 70 Gew.-%, insbesondere zu mindestens 80 Gew.-%, und insbesondere zu mindestens 90 Gew.-% entfernt. Für den Abführ-Feuchteanteil $\psi_2$ gilt somit:

$$\psi_2 = \psi_I + \psi_{O2},$$

wobei $\psi_{O2}$ den Oberflächenfeuchteanteil bei Abführung des getrockneten Kunststoff-Abfallmaterials $M_D$ bezeichnet. Es gilt insbesondere: $0\ ppm \le \psi_{O2} \le 3000\ ppm$, insbesondere $100\ ppm \le \psi_{O2} \le 2500\ ppm$, und insbesondere $300\ ppm \le \psi_{O2} \le 2000\ ppm$.

Das Kunststoff-Abfallmaterial Mw wird mittels des Fördergases F im Gleichstrom in der Förderleitung 7 gefördert und während der Förderung zu der Mehrwellen-Schneckenmaschine 2 getrocknet. Die Trocknungselemente verbessern das Trocknen bzw. die Trocknungswirkung und beschleunigen den Trocknungsvorgang des Kunststoff-Abfallmaterials Mw. Durch die Trocknungselemente wird mindestens eine Kraft auf das Kunststoff-Abfallmaterial Mw ausgeübt, wodurch die Trocknungswirkung verbessert wird. Das Kunststoff-Abfallmaterial $M_W$ wird in dem ersten Horizontalleitungsabschnitt 21 mittels des ersten Richtungsänderungsbauteils 30 bzw. des Dispergierbauteils dispergiert und anschließend mittels des ersten Umlenkleitungsabschnitts 22 um den Umlenkwinkel $\alpha$ umgelenkt. Die hierdurch auf das Kunststoff-Abfallmaterial Mw ausgeübten Kräfte verbessern die Trocknungswirkung und beschleunigen das Trocknen. In dem ersten Vertikalleitungsabschnitt 23 wird die Fördergeschwindigkeit $v_G$ aufgrund der Schwerkraft reduziert. Durch die Verzögerung wird einerseits eine Kraft auf das Kunststoff-Abfallmaterial Mw ausgeübt und andererseits eine Verweilzeit $t_G$ des Kunststoff-Abfallmaterials Mw in dem Fördergas F erhöht. Durch den zweiten Umlenkabschnitt 24 wird das Kunststoff-Abfallmaterial Mw erneut um einen Umlenkwinkel $\alpha$ umgelenkt, anschließend in dem zweiten Horizontalleitungsabschnitt 25 mittels des zweiten Richtungsänderungsbauteils 31 bzw. des Drallbauteils in Rotation versetzt und mittels des dritten Umlenkleitungsabschnitts 26 erneut um einen Umlenkwinkel $\alpha$ umgelenkt. Die hierdurch ausgeübten Kräfte verbessern die Trocknungswirkung und beschleunigen den Trocknungsvorgang. Aufgrund des zweiten Horizontalleitungsabschnitts 25 wird das Kunststoff-Abfallmaterial Mw zwischenzeitlich wieder beschleunigt und anschließend in dem zweiten Vertikalleitungsabschnitt 27 erneut verzögert. Mittels des zweiten Vertikalleitungsabschnitts 27 kann die Verweilzeit $t_G$ weiter erhöht werden. Anschließend wird das Kunststoff-Abfallmaterial $M_W$ mittels des vierten Umlenkleitungsabschnitts 28 erneut um einen Umlenkwinkel α umgelenkt und in dem horizontal angeordneten Querschnittveränderungsleitungsabschnitt 29 zunächst beschleunigt und anschließend wieder verzögert. Die hierdurch ausgeübten Kräfte verbessern die Trocknungswirkung und beschleunigen den Trocknungsvorgang. Das Kunststoff-Abfallmaterial Mw hat in der Förderleitung 7 bzw. in dem Fördergas F die Verweilzeit $t_G$, wobei insbesondere gilt: 2 s ≤ $t_G$ ≤ 10 s, insbesondere 3 s ≤ $t_G$ ≤ 8 s, und insbesondere 3 s ≤ $t_G$ ≤ 6 s. Tritt das Kunststoff-Abfallmaterial $M_W$ durch die Abführöffnung 20 aus der Förderleitung 7 aus, ist es als getrocknetes Kunststoff-Abfallmaterial $M_D$ bezeichnet.

Mittels der Trenneinrichtung 11 wird das getrocknete Kunststoff-Abfallmaterial $M_D$ von dem feuchten Fördergas F getrennt. Das getrocknete Kunststoff-Abfallmaterial $M_D$ wird der zweiten Dosiereinrichtung 6 zugeführt. Das feuchte Fördergas F wird dem Abscheider 33 zugeführt, in dem die Feinanteile A abgeschieden werden. Das gefilterte Fördergas F strömt in die Umgebung oder zum Stromerzeuger 8 zurück, so dass die Wärme bzw. thermische Energie des Fördergases F über Wärmetauscher erneut genutzt werden kann.

Das Kunststoff-Abfallmaterial $M_W$ wird mittels des Stromtrockners 5 um eine Temperatur ΔT erwärmt. Für die Temperatur ΔT gilt insbesondere: 2 °C ≤ ΔT ≤ 80 °C, insbesondere 5 °C ≤ ΔT ≤ 70 °C, und insbesondere 10 °C ≤ ΔT ≤ 60 °C.

Das Kunststoff-Abfallmaterial $M_D$ wird nach dem Stromtrockner 5 insbesondere ohne eine weitere Erwärmung und/oder eine weitere Trocknung der Mehrwellen-Schneckenmaschine 2 zugeführt. Das getrocknete Kunststoff-Material $M_D$ wird der Mehrwellen-Schneckenmaschine 2 insbesondere mit einer Temperatur $T_K$ zugeführt, wobei für die Temperatur $T_K$ insbesondere gilt: 0 °C ≤ $T_K$ ≤ 100 °C, insbesondere 10 °C ≤ $T_K$ ≤ 90 °C, insbesondere 20 °C ≤ $T_K$ ≤ 80 °C , insbesondere 30 °C ≤ $T_K$ ≤ 70 °C, und insbesondere 40 °C ≤ $T_K$ ≤ 60 °C. Das getrocknete Kunststoff-Abfallmaterial $M_D$ wird der Mehrwellen-Schneckenmaschine 2 insbesondere nicht-kristallisiert zugeführt.

Das getrocknete Kunststoff-Abfallmaterial $M_D$ wird mittels der zweiten Dosiereinrichtung 6 über den Einlauftrichter 55 und die Zuführöffnung 54 der Mehrwellen-Schneckenmaschine 2 zugeführt. Falls erwünscht oder erforderlich, kann Kunststoff-Neumaterial $M_N$ mittels der dritten Dosiereinrichtung 34 über den Einlauftrichter 55 und die Zuführöffnung 54 in die Mehrwellen-Schneckenmaschine 2 zugeführt werden.

Das zugeführte Kunststoff-Abfallmaterial $M_D$ und/oder das Kunststoff-Neumaterial $M_N$ wird in der Einzugszone 50 in der Förderrichtung 9' zu der Plastifizier- und Homogenisierzone 51 gefördert. In der Plastifizier- und Homogenisierzone 51 wird das Kunststoff-Abfallmaterial $M_D$ und/oder das Kunststoff-Neumaterial $M_N$ plastifiziert und homogenisiert. Durch das Plastifizieren wird die in dem Kunststoff-Abfallmaterial $M_D$ gebundene innere Feuchte frei. Die freigewordene innere Feuchte und eine etwaig verbliebene Oberflächenfeuchte werden in der Entgasungszone 52 aus den Gehäusebohrungen 44, 44' entfernt. Hierzu wird mittels der Vakuumpumpe ein Druck $p_{abs}$ erzeugt und die in den Gehäusebohrungen 44, 44' befindliche Feuchte über die Entgasungsöffnungen 59, 60 und die Entgasungsleitungen 63 abgesaugt. Für den Druck $p_{abs}$ beim Entgasen gilt insbesondere: 3 mbar ≤ $p_{abs}$ ≤ 50 mbar, insbesondere 5 mbar ≤ $p_{abs}$ ≤ 30 mbar, insbesondere 10 mbar ≤ $p_{abs}$ ≤ 25 mbar, und insbesondere 15 mbar ≤ $p_{abs}$ ≤ 20 mbar.

Dadurch, dass die Oberflächenfeuchte im Wesentlichen vollständig mittels des Stromtrockners 5 von dem feuchten Kunststoff-Abfallmaterial $M_W$ entfernt wurde, muss aus der Materialschmelze Ms, die aus dem getrockneten Kunststoff-Abfallmaterial $M_D$ erzeugt wurde, lediglich noch die innere Feuchte, also wesentlich weniger Feuchte abgeführt werden. Hierdurch kann die Entgasungseinrichtung 61 kleiner dimensioniert und mit einem geringeren Druck $p_{abs}$ betrieben werden.

Die Materialschmelze Ms hat in der Entgasungszone 52 eine Temperatur $T_M$, wobei insbesondere gilt: 265 °C ≤ $T_M$ ≤ 300 °C, insbesondere 270 °C ≤ $T_M$ ≤ 285 °C. Die Verweilzeit $v_M$ der Materialschmelze Ms in der Entgasungszone 52 beträgt insbesondere zwischen 10 s und 45 s, und insbesondere zwischen 15 s und 30 s. Bezogen auf 1 kg Materialschmelze $M_S$ wird die Entgasungseinrichtung 61 mit einem Volumenstrom von 0,3 m³/kg bis 2,5 m³/kg, insbesondere 0,5 m³/kg bis 1,5 m³/kg, und insbesondere 0,6 m³/kg bis 1,2 m³/kg betrieben.

Durch das Plastifizieren, Homogenisieren und Entgasen wird das Kunststoff-Abfallmaterial $M_D$ zu neuem Rohmaterial $M_R$ aufbereitet bzw. wiederaufbereitet. Das entstehende Rohmaterial $M_R$ wird anschließend über die Austragszone 53 durch die Austragsöffnung 68 ausgetragen. Das Rohmaterial $M_R$ kann anschließend auf übliche Weise weiterverarbeitet werden, beispielsweise gefiltert und/oder granuliert werden.

Dadurch, dass der Mehrwellen-Schneckenmaschine 2 getrocknetes Kunststoff-Abfallmaterial $M_D$ zugeführt wird, kann das Aufbereiten mittels der Mehrwellen-Schneckenmaschine 2 mit einem höheren Durchsatz D erfolgen. Für den Durchsatz D gilt insbesondere: 500 kg/h ≤ D ≤ 25000 kg/h, insbesondere 1000 kg/h ≤ D ≤ 20000 kg/h, und insbesondere 1500 kg/h ≤ D ≤ 15000 kg/h.

Der Stromtrockner 5 ermöglicht eine einfache, energieeffiziente und wirtschaftliche Trocknung des feuchten Kunststoff-Abfallmaterials Mw. Der Stromtrockner 5 hat einen geringen Platzbedarf, einen geringen Energieverbrauch und geringe Investitions- und Betriebskosten. Das Kunststoff-Abfallmaterial Mw wird schonend getrocknet. Durch das Trocknen vereinfacht sich das nachfolgende Wiederaufbereiten mittels der Mehrwellen-Schneckenmaschine 2. Dadurch, dass weniger Feuchte aus der Mehrwellen-Schneckenmaschine 2 abgeführt werden muss, kann die Entgasungseinrichtung 61 kleiner dimensioniert und mit einem geringeren Druck $p_{abs}$ betrieben werden. Hierdurch kann der Durchsatz D erhöht werden. Insgesamt ermöglicht das Verfahren bzw. die Wiederaufbereitungsanlage 1 eine einfache, energieeffiziente, wirtschaftliche, zuverlässige und effektive Wiederaufbereitung des Kunststoff-Abfallmaterials Mw, insbesondere von PET-Abfallmaterial.

**Patentansprüche**

1.  Verfahren zur Wiederaufbereitung von Kunststoff-Abfallmaterial, insbesondere von PET-Abfallmaterial, umfassend folgende Schritte:

    - Bereitstellen von Kunststoff-Abfallmaterial ($M_W$),
    - Trocknen des Kunststoff-Abfallmaterials ($M_W$) mittels eines Stromtrockners (5) in einer Förderleitung (7),
    - Zuführen des getrockneten Kunststoff-Abfallmaterials ($M_D$) in eine Mehrwellen-Schneckenmaschine (2), und
    - Wiederaufbereiten des getrockneten Kunststoff-Abfallmaterials ($M_D$) mittels der Mehrwellen-Schneckenmaschine (2).

2.  Verfahren nach Anspruch 1, **dadurch gekennzeichnet,**
    **dass** das Kunststoff-Abfallmaterial (Mw) mittels eines Fördergases (F) gefördert und während der Förderung zu der Mehrwellen-Schneckenmaschine (2) getrocknet wird.

3.  Verfahren nach Anspruch 1 oder 2, **dadurch gekennzeichnet,**
    **dass** ein Fördergas (F) in der Förderleitung (7) eine Temperatur $T_G$ hat, wobei gilt: 70 °C $\leq T_G \leq$ 250 °C, insbesondere 80 °C $\leq T_G \leq$ 220 °C, und insbesondere 90 °C $\leq T_G \leq$ 190 °C.

4.  Verfahren nach mindestens einem der vorangegangenen Ansprüche,
    **dadurch gekennzeichnet,**
    **dass** das Kunststoff-Abfallmaterial (Mw) eine Schmelztemperatur Ts und ein Fördergas (F) in der Förderleitung (7) eine Temperatur $T_G$ hat, wobei gilt: Ts - 100 °C $\leq T_G <$ Ts, insbesondere Ts - 80 °C $\leq T_G \leq$ Ts - 10 °C, und insbesondere $T_S$ - 60 °C $\leq T_G \leq T_S$ - 20 °C.

5.  Verfahren nach mindestens einem der vorangegangenen Ansprüche,
    **dadurch gekennzeichnet,**
    **dass** eine Masse $m_G$ eines Fördergases (F) mit einer Masse $m_M$ des Kunststoff-Abfallmaterials (Mw) beladen wird, wobei gilt: $0{,}3 \leq m_M/m_G \leq 4$, insbesondere $0{,}4 \leq m_M/m_G \leq 3$, und insbesondere $0{,}5 \leq m_M/m_G \leq 2$.

6.  Verfahren nach mindestens einem der vorangegangenen Ansprüche,
    **dadurch gekennzeichnet,**
    **dass** ein Fördergas (F) in der Förderleitung (7) eine Fördergeschwindigkeit $v_G$ hat, wobei gilt: 5 m/s $\leq v_G \leq$ 50 m/s, insbesondere 10 m/s $\leq v_G \leq$ 45 m/s, und insbesondere 15 m/s $\leq v_G \leq$ 40 m/s.

7.  Verfahren nach mindestens einem der vorangegangenen Ansprüche,
    **dadurch gekennzeichnet,**
    **dass** das Kunststoff-Abfallmaterial (Mw) in einem Fördergas (F) eine Verweilzeit $t_G$ hat, wobei gilt: 2 s $\leq t_G \leq$ 10 s, insbesondere 3 s $\leq t_G \leq$ 8 s, und insbesondere 3 s $\leq t_G \leq$ 6 s.

8.  Verfahren nach mindestens einem der vorangegangenen Ansprüche,
    **dadurch gekennzeichnet,**
    **dass** das Kunststoff-Abfallmaterial (Mw) während der Förderung umgelenkt und/oder in Rotation versetzt und/oder dispergiert und/oder verzögert und/oder beschleunigt wird.

9.  Verfahren nach mindestens einem der vorangegangenen Ansprüche,
    **dadurch gekennzeichnet,**

    **dass** das Kunststoff-Abfallmaterial ($M_W$) bei Zuführung in ein Fördergas (F) einen Zuführ-Feuchteanteil $\psi_1$ hat, wobei gilt: 4000 ppm $\leq \psi_1 \leq$ 50000 ppm, insbesondere 5000 ppm $\leq \psi_1 \leq$ 35000 ppm, und insbesondere 6000 ppm $\leq \psi_1 \leq$ 20000 ppm, und/oder
    **dass** das getrocknete Kunststoff-Abfallmaterial ($M_D$) bei Abführung aus einem Fördergas (F) einen Abführ-Feuchteanteil $\psi_2$ hat, wobei gilt: 3000 ppm $\leq \psi_2 \leq$ 6000 ppm, insbesondere 3500 ppm $\leq \psi_2 \leq$ 5500 ppm, und insbesondere 4000 ppm $\leq \psi_2 \leq$ 5000 ppm.

10. Verfahren nach mindestens einem der vorangegangenen Ansprüche,
    **dadurch gekennzeichnet,**
    **dass** das Aufbereiten des getrockneten Kunststoff-Abfallmaterial ($M_D$) mittels der Mehrwellen-Schneckenmaschine (2) mit einem Durchsatz D erfolgt, wobei gilt: 500 kg/h $\leq$ D $\leq$ 25000 kg/h, insbesondere 1000 kg/h $\leq$ D $\leq$ 20000 kg/h, und insbesondere 1500 kg/h $\leq$ D $\leq$ 15000 kg/h.

11. Verfahren nach mindestens einem der vorangegangenen Ansprüche, **dadurch gekennzeichnet,** **dass** das getrocknete Kunststoff-Abfallmaterial ($M_D$) in der Mehrwelle-Schneckenmaschine (2) aufgeschmolzen und entgast wird, wobei das Entgasen insbesondere bei einem Druck $p_{abs}$ erfolgt, wobei gilt: 3 mbar $\leq p_{abs} \leq$ 50 mbar, insbesondere 5 mbar $\leq p_{abs} \leq$ 30 mbar, insbesondere 10 mbar $\leq p_{abs} \leq$ 25 mbar, und insbesondere 15 mbar $\leq p_{abs} \leq$ 20 mbar.

12. Wiederaufbereitungsanlage zur Wiederaufbereitung von Kunststoff-Abfallmaterial, insbesondere von PET-Abfallmaterial, mit

    - einer Mehrwellen-Schneckenmaschine (2) zum Plastifizieren und Wiederaufbereiten des Kunststoff-Abfallmaterials ($M_W$), und
    - einer Zuführvorrichtung (3) zum Zuführen des Kunststoff-Abfallmaterials ($M_D$) in die Mehrwellen-Schneckenmaschine (2),

    **dadurch gekennzeichnet,** **dass** die Zuführvorrichtung (3) einen Stromtrockner (5) zum Trocknen des Kunststoff-Abfallmaterials (Mw) in einer Förderleitung (7) umfasst.

13. Wiederaufbereitungsanlage nach Anspruch 12, **dadurch gekennzeichnet,** **dass** der Stromtrockner (5) eine Förderleitung (7), einen Stromerzeuger (8) zum Erzeugen eines strömenden Fördergases (F) und eine Heizeinrichtung (10) zum Erwärmen des Fördergases (F) umfasst.

14. Wiederaufbereitungsanlage nach Anspruch 12 oder 13, **dadurch gekennzeichnet,** **dass** der Stromtrockner (5) eine Trenneinrichtung (11) zum Abtrennen des getrockneten Kunststoff-Abfallmaterials ($M_D$) von dem Fördergas (F) umfasst.

15. Wiederaufbereitungsanlage nach mindestens einem der Ansprüche 12 bis 14, **dadurch gekennzeichnet,** **dass** der Stromtrockner (5) mindestens ein Trocknungselement (22, 23, 24, 26, 27, 28, 29, 30, 31) zur Verbesserung des Trocknens des Kunststoff-Abfallmaterials ($M_W$) umfasst.

16. Wiederaufbereitungsanlage nach mindestens einem der Ansprüche 12 bis 15, **dadurch gekennzeichnet,**

    **dass** die Zuführvorrichtung (3) eine Dosiereinrichtung (4) zum Beladen des Stromtrockners (5) mit dem Kunststoff-Abfallmaterial ($M_W$) umfasst, und/oder **dass** die Zuführvorrichtung (3) eine Dosiereinrichtung (6) zum Zuführen des getrockneten Kunststoff-Abfallmaterials ($M_D$) in die Mehrwellen-Schneckenmaschine (2) umfasst.

17. Wiederaufbereitungsanlage nach mindestens einem der Ansprüche 12 bis 16, **dadurch gekennzeichnet,** **dass** die Mehrwellen-Schneckenmaschine (2) mindestens eine Entgasungseinrichtung (61) zum Entgasen des getrockneten Kunststoff-Abfallmaterials ($M_D$) umfasst.

18. Wiederaufbereitungsanlage nach mindestens einem der Ansprüche 12 bis 17, **gekennzeichnet durch** eine Steuereinrichtung (69) zum Steuern der Zuführvorrichtung (3) und/oder der Mehrwellen-Schneckenmaschine (2).

Fig. 1

EP 4 119 317 A1

Fig. 2

Fig. 3

EP 4 119 317 A1

Fig. 4

Europäisches
Patentamt

European
Patent Office

Office européen
des brevets

**EUROPÄISCHER RECHERCHENBERICHT**

**Nummer der Anmeldung**

**EP 22 18 1151**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 27 03 461 A1 (ZIMMER AG) 3. August 1978 (1978-08-03) * das ganze Dokument * ----- | 1-18 | INV. B29B13/06 B29B17/00 F26B17/00 |
| A | US 5 722 603 A (COSTELLO MICHAEL ROBERT [US] ET AL) 3. März 1998 (1998-03-03) ----- | 9 | |
| A | EP 3 221 119 A1 (MOHAWK IND INC [US]) 27. September 2017 (2017-09-27) ----- | 11,17 | |
| A | EP 0 781 638 A2 (BUNA SOW LEUNA OLEFINVERB GMBH [DE]) 2. Juli 1997 (1997-07-02) * Seite 3 * ----- | 5,7 | |
| A | DE 42 40 716 A1 (WACKER CHEMIE GMBH [DE]) 9. Juni 1994 (1994-06-09) * Anspruch 3 swoie Beispiel 3 * ----- | 6,10 | |
| X | DE 10 2005 043526 A1 (SCHOELLER PET RECYCLING GMBH [DE]) 15. März 2007 (2007-03-15) * Absatz [0003] - Absatz [0037]; Anspruch 1 * ----- | 1-18 | RECHERCHIERTE SACHGEBIETE (IPC) B29B F26B |
| X,D | WO 2006/079128 A1 (EREMA [AT]; BACHER HELMUT [AT] ET AL.) 3. August 2006 (2006-08-03) * figur 3 und zugehöriger Teil der Beschreibung * ----- | 1-18 | |
| X | US 6 460 788 B1 (DE FERAUDY HUGUES [FR]) 8. Oktober 2002 (2002-10-08) * Figur 3 und zugehöriger Teil der Beschreibung * ----- | 1-18 | |

| | | |
|---|---|---|
| Der vorliegende Recherchenbericht wurde für alle Patentansprüche erstellt | | |
| Recherchenort **München** | Abschlußdatum der Recherche **3. August 2022** | Prüfer **Rüdiger, Patrick** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 18 1151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2022

| Im Recherchenbericht angeführtes Patentdokument | | Datum der Veröffentlichung | Mitglied(er) der Patentfamilie | | Datum der Veröffentlichung |
|---|---|---|---|---|---|
| DE 2703461 | A1 | 03-08-1978 | DE | 2703461 A1 | 03-08-1978 |
| | | | FR | 2378622 A1 | 25-08-1978 |
| | | | GB | 1578502 A | 05-11-1980 |
| | | | IT | 1091823 B | 06-07-1985 |
| | | | NL | 7713304 A | 01-08-1978 |
| | | | US | 4143001 A | 06-03-1979 |
| US 5722603 | A | 03-03-1998 | CA | 2237310 A1 | 19-06-1997 |
| | | | DE | 69618988 T2 | 26-09-2002 |
| | | | EP | 0868213 A2 | 07-10-1998 |
| | | | US | 5722603 A | 03-03-1998 |
| | | | WO | 9721490 A2 | 19-06-1997 |
| EP 3221119 | A1 | 27-09-2017 | AU | 2015350080 A1 | 04-05-2017 |
| | | | AU | 2018200762 A1 | 22-02-2018 |
| | | | BR | 112017010469 A2 | 03-04-2018 |
| | | | CA | 2968226 A1 | 26-05-2016 |
| | | | CN | 107206656 A | 26-09-2017 |
| | | | EA | 201791091 A1 | 29-09-2017 |
| | | | EA | 201992031 A1 | 28-01-2020 |
| | | | EP | 3221119 A1 | 27-09-2017 |
| | | | EP | 3456502 A1 | 20-03-2019 |
| | | | EP | 3501785 A1 | 26-06-2019 |
| | | | ES | 2832738 T3 | 11-06-2021 |
| | | | ES | 2834637 T3 | 18-06-2021 |
| | | | KR | 20170066662 A | 14-06-2017 |
| | | | MX | 371054 B | 14-01-2020 |
| | | | PL | 3221119 T3 | 06-04-2021 |
| | | | PL | 3456502 T3 | 06-04-2021 |
| | | | WO | 2016081495 A1 | 26-05-2016 |
| EP 0781638 | A2 | 02-07-1997 | AT | 208695 T | 15-11-2001 |
| | | | DE | 19548515 C1 | 10-07-1997 |
| | | | EP | 0781638 A2 | 02-07-1997 |
| | | | ES | 2168430 T3 | 16-06-2002 |
| DE 4240716 | A1 | 09-06-1994 | KEINE | | |
| DE 102005043526 | A1 | 15-03-2007 | DE | 102005043526 A1 | 15-03-2007 |
| | | | EP | 1934030 A1 | 25-06-2008 |
| | | | WO | 2007031255 A1 | 22-03-2007 |
| WO 2006079128 | A1 | 03-08-2006 | AT | 501154 A4 | 15-07-2006 |
| | | | AU | 2005326181 A1 | 03-08-2006 |
| | | | BR | PI0519871 A2 | 24-03-2009 |
| | | | CA | 2595928 A1 | 03-08-2006 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT
ÜBER DIE EUROPÄISCHE PATENTANMELDUNG NR.**

EP 22 18 1151

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2022

| Im Recherchenbericht angeführtes Patentdokument | Datum der Veröffentlichung | Mitglied(er) der Patentfamilie | Datum der Veröffentlichung |
|---|---|---|---|
| | | CN 101111360 A | 23-01-2008 |
| | | EP 1841586 A1 | 10-10-2007 |
| | | JP 4523973 B2 | 11-08-2010 |
| | | JP 2008528325 A | 31-07-2008 |
| | | KR 20070107077 A | 06-11-2007 |
| | | RU 2356734 C1 | 27-05-2009 |
| | | TW I321091 B | 01-03-2010 |
| | | UA 88669 C2 | 10-11-2009 |
| | | US 2009004325 A1 | 01-01-2009 |
| | | WO 2006079128 A1 | 03-08-2006 |
| | | ZA 200705528 B | 26-11-2008 |
| US 6460788 B1 | 08-10-2002 | AT 452013 T | 15-01-2010 |
| | | AU 2062599 A | 09-08-1999 |
| | | CA 2318364 A1 | 29-07-1999 |
| | | EP 1058609 A1 | 13-12-2000 |
| | | ES 2338498 T3 | 07-05-2010 |
| | | FR 2773736 A1 | 23-07-1999 |
| | | PT 1058609 E | 23-03-2010 |
| | | US 6460788 B1 | 08-10-2002 |
| | | WO 9937452 A1 | 29-07-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021207614
- WO 2006079128 A1
- US 20090004325 A1